# EUROPEAN PATENT SPECIFICATION

(11) **EP 3 524 742 B1**
(45) Date of publication and mention of the grant of the patent: **15.09.2021**
(21) Application number: 19275011.5
(22) Date of filing: 25.01.2019
(51) Int. Cl.: E03C 1/324, F16B 5/02

(54) **ADJUSTABLE FIXING PLATE FOR WASH BASIN INSTALLATION**
VERSTELLBARE BEFESTIGUNGSPLATTE FÜR EINE WASCHBECKENINSTALLATION
PLAQUE DE FIXATION RÉGLABLE POUR INSTALLATION DE LAVABO

(30) Priority: 27.01.2018 GB 201801361
(43) Date of publication of application: 14.08.2019
(73) Proprietor: Beeke, Laurence, Coulsdon, Surrey CR5 1PB (GB); Beeke, Edina, Coulsdon, Surrey CR5 1PB (GB)
(72) Inventor: Beeke, Laurence, Coulsdon, Surrey CR5 1PB (GB); Beeke, Edina, Coulsdon, Surrey CR5 1PB (GB)
(74) Representative: Murgitroyd & Company

(56) References cited:
- WO-A1-2006/099644
- DE-B- 1 105 357
- DE-C- 841 666

## Description

### Field of the Invention

The present invention relates to an adjustable wall mounted sink fixing plate for wash basin installation.

### Background to the Invention

Upon the installation of a domestic wall mounted wash basin in a bathroom, a wash basin is installed against either a solid wall of brick construction or a partition wall of wood and plasterboard construction also known as a stud wall. The wash basin generally is made from ceramic with two mounting holes on the rear of the wash basin of circular or oval shape. The distance apart of the two mounting holes in the horizontal plane varies, it can range from between 10mm-300mm, the standard distance apart for the holes in the horizontal plane between centres is generally, 200mm, 240mm, 270mm, 280mm, 285mm or 290mm depending on wash basin manufacturer. The weight of wash basins vary and can be anything between 1kg-20kgs or more. Accordingly it is an accepted practice to mount a wash basin with two individual 120-150mm length fixing bolts. Such fixings have a screw thread on one end and an M8 or M10 bolt on the other. The screw thread is fixed into the wall with an appropriate wall plug and the bolt protrudes from the wall from between 40mm-120mm. The bolt threads align with the holes in the back of the wash basin and a nylon bushing prevents the thread touching the ceramic wash basin while a washer and nut fix onto the end of the bolt to secure the wash basin to the wall.
Due to the weight of the wash basin and the distance of the fixing holes, it may be difficult to get an accurate, strong and secure fixing especially if the quality of the brick wall construction is bad or no solid fixing support is in the appropriate position for a plasterboard or stud wall installation.

### Summary of the Invention

According to a first aspect of the present invention, there is provided a plate for fixing a wash basin to a wall as claimed in the accompanying claims.

In accordance with the present invention a plate is stamped to any shape that is such that there is little possibility of the plate being seen after the wash basin and possibly a wash basin pedestal is in place. The present invention is made of steel although other high strength materials may be possible at between 1.5mm-6mm thick and can be finished with either a zinc plated finish, a galvanised finish or a spray coated finish in any colour. The plate has a minimum of 4 holes or more for fixing vertically to the wall. The plate has a cut-out of 11mm in height and 310mm in length although any suitable height and length could be used. Within the centre of the plate is a circular cut out of 36mm diameter, although any size diameter could be used. On the rear side of the plate a milled section of between 1mm-5mm in depth although any depth may be used and 336mm in length on the horizontal plane although any length may be used and 36mm in width on the vertical plane although any width may be used.

Along with the plate are two quantity square 10mm shoulder, suitable bolts such as elevator bolts, although any shape and size shoulder may be used, the head of the elevator bolt is 35mm in diameter being flat and round, although any shape and size head may be used, the elevator bolts are 50mm or 120mm in length, although any length may be used. The diameter of the elevator bolt is M10 although any diameter between M6-M12 may be used and the thickness of the elevator bolt head is 2mm although any thickness may be used.

The plate may be fixed to either a solid construction brick wall or a partition construction wood and plasterboard wall in the vertical position with appropriate solid or plasterboard fixings using the holes in the plate provided. Once the plate is fixed in place, the elevator bolts are inserted through the centre aperture and slid along to the appropriate positions according to the wash basin fixing holes.

### Detailed Description

For a better understanding of the present invention, reference will now be made, by way of example, to the accompanying drawings, in which:
Figure 1 is a perspective view of the rear of a wash basin showing details of a prior fixing method for wall mounting of a wash basin;
Figure 2 is a cross section view of a prior fixing method for wall mounting of a wash basin;
Figure 3 is a perspective, front elevation view of the preferred fixing plate in accordance with the present invention;
Figure 4 is a perspective, rear elevation view of the preferred fixing plate in accordance with the present invention;
Figure 5 is a perspective view of the elevator bolt in accordance with the present invention;
Figure 6 is a perspective view of both the wall fixing plate and the elevator bolts in situ in accord with the present invention; and
Figure 7 is a cross section view of the wash basin preferred fixing plate in accordance with the present invention.

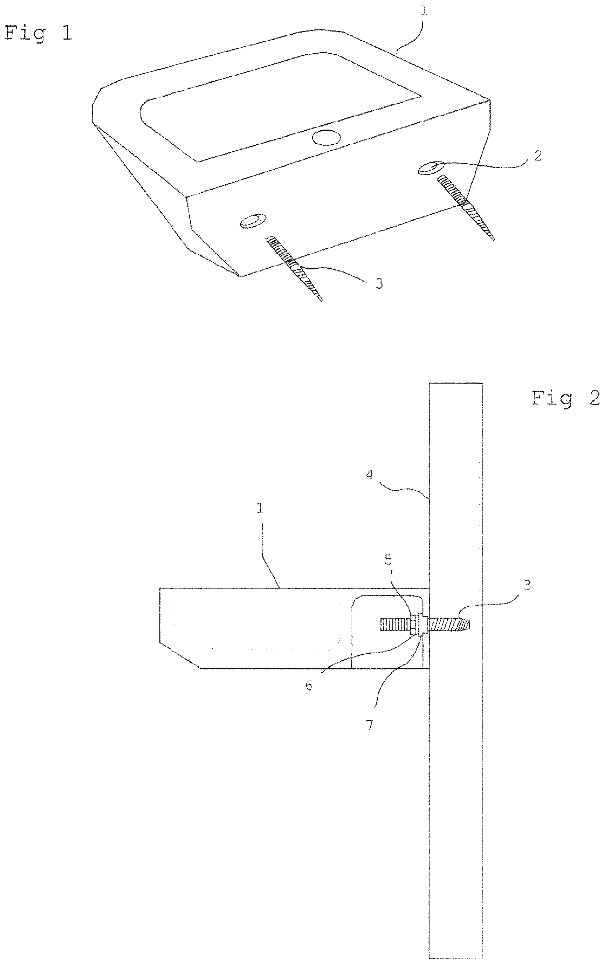

Referring to Figure 1 there is a wash basin 1 with fixing holes 2 with previous fixing bolt 3.

Referring to Figure 2 the wash basin 1 is fixed perpendicular to wall 4 with previous fixing bolt 3. Wash basin 1 is held against wall 4 by a nylon bushing 7, washer 6 and nut 5.

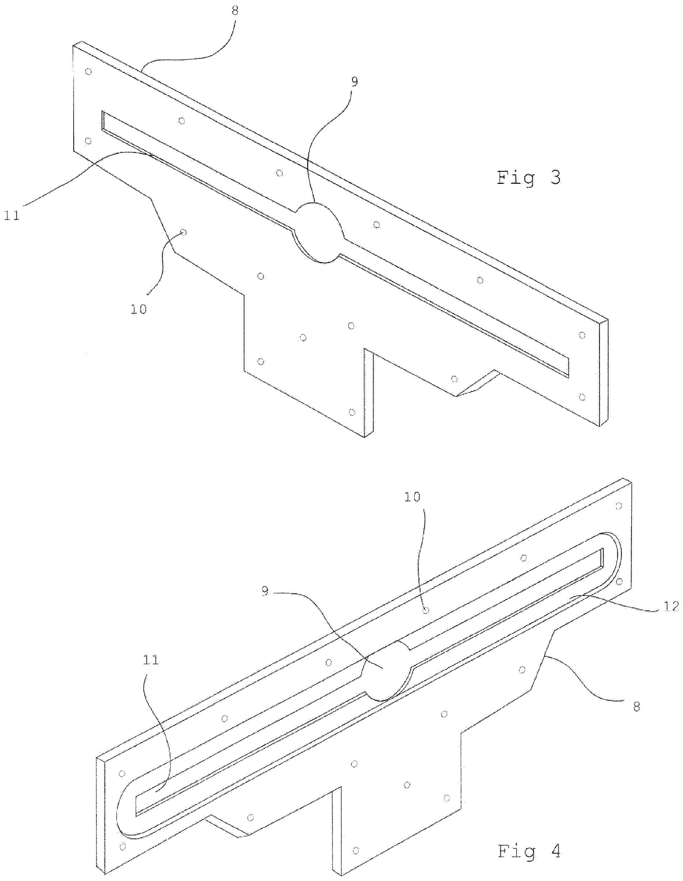

Referring to Figure 3 the preferred fixing method is shown as plate 8. The shape is such that it is smaller than the rear elevation of wash basin 1. Plate 8 may be 1.5mm-6mm in depth. Fifteen quantity countersunk holes 10 are in the preferred plate 8 providing fixing where necessary, however there may be less or more. A rectangular slot 11; 11mm x 320mm is cut-out of plate 8 however this may be wider or longer as is necessary. A 36mm Diameter hole 9 is cut-out of the plate 8 in the centre of rectangular cut-out 11 providing access to the elevator bolt head 15 after the preferred plate 8 has been fixed to the wall 4 using appropriate screw fixings 19.

Referring to Figure 4 the rear of the plate 8 has a milled recess 12 of 2mm enabling the head thickness 14 of the elevator bolt 17 to sit flush with the back of the plate 8 within the milled recess 12, however this recess maybe less or more depending on the thickness of the plate 8 and of the elevator bolt head 14.

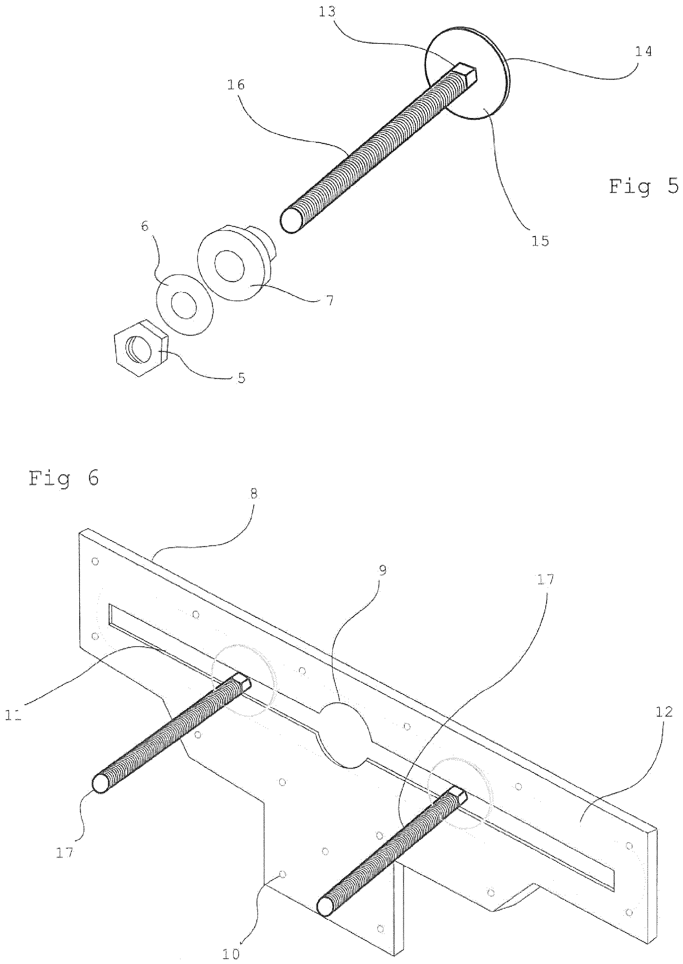

Referring to Figure 5 an elevator bolt 17, with a head diameter 15 of between 15mm-45mm with a square shoulder 13 of between 10mm-20mm and threaded bolt 16 of which the diameter may be between 6mm-12mm and length of such may be between 30mm-150mm. The head thickness of the elevator bolt 14 maybe between 1mm-5mm in accord with the milled recess 12 on the back of plate 8. A nylon bushing 7, washer 6 and nut 5 holds wash basin 1 onto the preferred fixing plate 8.

Referring to Figure 6, two quantity elevator bolts 17 are inserted through a 36mm aperture 9 although any size aperture may be used and slid along rectangular cut-out 11 on preferred fixing plate 8 to the appropriate position in accordance with the distance apart of holes 2 in wash basin 1.

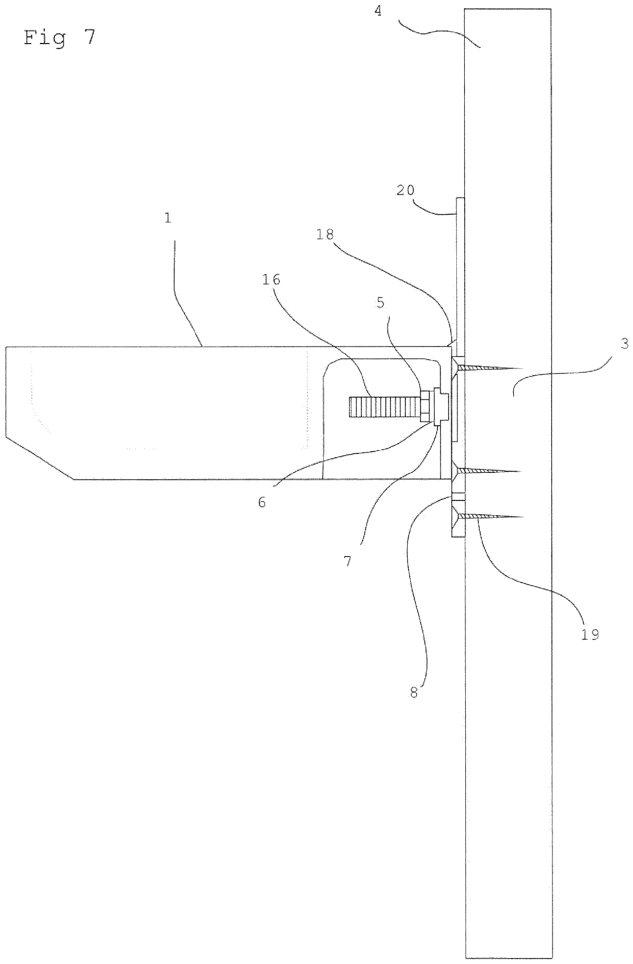

Referring to Figure 7, the preferred fixing plate 8 is attached to wall 4 using appropriate fixing screws 19. The wash basin 1 is attached to the fixing plate 8 with a nylon bushing 7, washer 6, while the nut 5 is screwed onto the elevator bolt 17. A tiled finish 20 maybe applied up to the edge of preferred fixing plate 8 and silicone 18 may be used to seal between wash basin 1 and wall 4.

## Claims

1. A plate (8) for fixing a wash basin to a wall, said plate (8) comprising:
a first surface and a second surface opposing one another;
at least four holes for fixing said plate (8) to a wall, each hole extending from said first surface to said second surface;
a slot (11) with a width and a length;
said slot (11) comprising a central aperture (9);
said second surface comprising a milled recess (12) adjacent to the periphery of said slot (11);
said plate further comprising an elevator bolt (17),
**characterised in that** said slot (11), said central aperture (9) and said recess (12) are configured such that, when fixed to a wall, a head (15) of said elevator bolt (17) can be inserted through said central aperture (9) and said elevator bolt (17) can be moved along the length of said slot (11), said recess (12) configured to accommodate said head (15) such that a surface of said head (15) sits flush with said second surface.

2. The plate (8) according to claim 1, wherein said plate (8) is stamped into a shape.

3. The plate (8) according to claim 1 or claim 2, wherein said plate (8) consists of steel.

4. The plate (8) according to any one preceding claim, wherein the distance between the first surface and the second surface is between 1.5 mm and 6 mm.

5. The plate (8) according to any one preceding claim, wherein said plate (8) has a finish selected from the group: zinc plated; galvanised; spray coated a colour.

6. The plate (8) according to any one preceding claim, wherein said slot (11) is substantially rectangular.

7. The plate (8) according to claim 6, wherein said slot (11) is 11 mm in height and 310 mm in width.

8. The plate (8) according to any one preceding claim, wherein said central aperture (9) is circular.

9. The plate (8) according to claim 8, wherein the diameter of said central aperture (9) is 36 mm.

10. The plate (8) according to any one preceding claim, wherein said recess (12) is between 1 mm and 5 mm in depth.

11. The plate (8) according to any one preceding claim, wherein said recess (12) is 336 mm in length.

12. The plate (8) according to any one preceding claim, wherein each of said holes is a countersunk hole.

13. The plate (8) according to any one preceding claim, wherein said plate comprises a second elevator bolt (17).

## Patentansprüche

1. Eine Platte (8) zum Befestigen eines Waschbeckens an einer Wand, wobei die Platte (8) Folgendes beinhaltet:
eine erste Oberfläche und eine zweite Oberfläche, die einander entgegengesetzt sind;
mindestens vier Löcher zum Befestigen der Platte (8) an einer Wand, wobei sich jedes Loch von der ersten Oberfläche zu der zweiten Oberfläche erstreckt;
einen Schlitz (11) mit einer Breite und einer Länge;
wobei der Schlitz (11) eine zentrale Öffnung (9) beinhaltet;
wobei die zweite Oberfläche eine gefräste Aussparung (12) beinhaltet, die an den Rand des Schlitzes (11) angrenzt;
wobei die Platte ferner eine Elevatorschraube (17) beinhaltet,
**dadurch gekennzeichnet, dass** der Schlitz (11), die zentrale Öffnung (9) und die Aussparung (12) so konfiguriert sind, dass, wenn sie an einer Wand befestigt sind, ein Kopf (15) der Elevatorschraube (17) durch die zentrale Öffnung (9) eingeführt werden kann und die Elevatorschraube (17) entlang der Länge des Schlitzes (11) bewegt werden kann, wobei die Aussparung (12) konfiguriert ist, um den Kopf (15) aufzunehmen, sodass eine Oberfläche des Kopfs (15) mit der zweiten Oberfläche bündig abschließt.

2. Platte (8) gemäß Anspruch 1, wobei die Platte (8) zu einer Form gepresst ist.

3. Platte (8) gemäß Anspruch 1 oder Anspruch 2, wobei die Platte (8) aus Stahl besteht.

4. Platte (8) gemäß einem der vorhergehenden Ansprüche, wobei der Abstand zwischen der ersten Oberfläche und der zweiten Oberfläche zwischen 1,5 mm und 6 mm liegt.

5. Platte (8) gemäß einem der vorhergehenden Ansprüche, wobei die Platte (8) ein Finish aufweist, das aus der folgenden Gruppe ausgewählt ist: verzinkt; galvanisiert; spritzbeschichtet in einer Farbe.

6. Platte (8) gemäß einem der vorhergehenden Ansprüche, wobei der Schlitz (11) im Wesentlichen rechteckig ist.

7. Platte (8) gemäß Anspruch 6, wobei der Schlitz (11) 11 mm hoch und 310 mm breit ist.

8. Platte (8) gemäß einem der vorhergehenden Ansprüche, wobei die zentrale Öffnung (9) rund ist.

9. Platte (8) gemäß Anspruch 8, wobei der Durchmesser der zentralen Öffnung (9) 36 mm beträgt.

10. Platte (8) gemäß einem der vorhergehenden Ansprüche, wobei die Aussparung (12) zwischen 1 mm und 5 mm tief ist.

11. Platte (8) gemäß einem der vorhergehenden Ansprüche, wobei die Aussparung (12) 336 mm lang ist.

12. Platte (8) gemäß einem der vorhergehenden Ansprüche, wobei jede der Ansenkungen eine konische Ansenkung ist.

13. Platte (8) gemäß einem der vorhergehenden Ansprüche, wobei die Platte eine zweite Elevatorschraube (17) beinhaltet.

## Revendications

1. Une plaque (8) pour fixer un lavabo à un mur, ladite plaque (8) comprenant :
une première surface et une deuxième surface opposées l'une à l'autre ;
au moins quatre trous pour fixer ladite plaque (8) à un mur, chaque trou s'étendant de ladite première surface à ladite deuxième surface ;
une fente (11) disposant d'une largeur et d'une longueur ;
ladite fente (11) comprenant une ouverture centrale (9) ;
ladite deuxième surface comprenant un renfoncement fraisé (12) adjacent à la périphérie de ladite fente (11) ;
ladite plaque comprenant en outre un boulon élévateur (17),
**caractérisée en ce que** ladite fente (11), ladite ouverture centrale (9) et ledit renfoncement (12) sont configurés de telle sorte que, lors de la fixation à un mur, une tête (15) dudit boulon élévateur (17) peut être insérée à travers ladite ouverture centrale (9) et ledit boulon élévateur (17) peut être déplacé sur la longueur de ladite fente (11), ledit renfoncement (12) étant configuré pour accueillir ladite tête (15) de telle sorte qu'une surface de ladite tête (15) s'aligne avec ladite deuxième surface.

2. La plaque (8) conformément à la revendication 1, ladite plaque (8) étant estampée selon une forme.

3. La plaque (8) conformément à la revendication 1 ou la revendication 2, ladite plaque (8) consistant en de l'acier.

4. La plaque (8) conformément à une quelconque revendication précédente, dans laquelle la distance entre la première surface et la deuxième surface fait entre 1,5 mm et 6 mm.

5. La plaque (8) conformément à une quelconque revendication précédente, ladite plaque (8) présentant un fini sélectionné dans le groupe de : plaqué zinc ; galvanisé ; revêtu par pulvérisation d'une couleur.

6. La plaque (8) conformément à une quelconque revendication précédente, dans laquelle ladite fente (11) est substantiellement rectangulaire.

7. La plaque (8) conformément à la revendication 6, dans laquelle ladite fente (11) fait 11 mm de hauteur et 310 mm de largeur.

8. La plaque (8) conformément à une quelconque revendication précédente, dans laquelle ladite ouverture centrale (9) est circulaire.

9. La plaque (8) conformément à la revendication 8, dans laquelle le diamètre de ladite ouverture centrale (9) fait 36 mm.

10. La plaque (8) conformément à une quelconque revendication précédente, dans laquelle ledit renfoncement (12) fait entre 1 mm et 5 mm de profondeur.

11. La plaque (8) conformément à une quelconque revendication précédente, dans laquelle ledit renfoncement (12) fait 336 mm de longueur.

12. La plaque (8) conformément à une quelconque revendication précédente, dans laquelle chacun desdits trous est une noyure.

13. La plaque (8) conformément à une quelconque revendication précédente, ladite plaque comprenant un deuxième boulon élévateur (17).
